**Europäisches Patentamt**

**European Patent Office**

**Office européen des brevets**

(19)

(11) Veröffentlichungsnummer : **0 581 740 A2**

# (12) EUROPÄISCHE PATENTANMELDUNG

(21) Anmeldenummer : **93810527.7**

(51) Int. Cl.$^5$ : **B01D 29/66**

(22) Anmeldetag : **22.07.93**

(30) Priorität : **30.07.92 CH 2404/92**

(43) Veröffentlichungstag der Anmeldung :
**02.02.94 Patentblatt 94/05**

(84) Benannte Vertragsstaaten :
**AT CH DE FR GB LI NL**

(71) Anmelder : **Christ AG**
**Hauptstrasse 192**
**CH-4147 Aesch (CH)**

(72) Erfinder : **Stamm, Hans Peter**
**Mühlemattstrasse 25**
**CH-4112 Bättwil (CH)**
Erfinder : **Meuli, Kurt**
**Obere Flühackerstrasse 6**
**CH-4402 Frenkendorf (CH)**

(74) Vertreter : **Zimmermann, Hans, Dr. et al**
**c/o A. Braun Braun Héritier Eschmann AG**
**Patentanwälte VSP Holbeinstrasse 36-38**
**Postfach 160**
**CH-4003 Basel (CH)**

(54) **Reinigung von Anschwemmfiltern.**

(57)    Zur Reinigung eines Anschwemmfilters mit hängend eingebauten Filterelementen (14) wird, bei mit Spülmedium gefülltem Plenum (3), zuerst durch Oeffnen einer im obersten Bereich der Filterkammer (2) angeordneten Belüftungsleitung (6) die Flüssigkeit aus der Filterkammer über eine Entleerungsleitung (7) ganz oder teilweise abgeleitet, dann wird mittels einer am Plenum angeordneten Druckerzeugungs-leitung (8) , über die Treibgas oder Spülmedium unter Druck ins Plenum geleitet wird, im Plenum ein Druckstoss erzeugt, der das Spülmedium durch die Filterelemente treibt, und schliesslich werden die Verunreinigungen zusammen mit der Flüssigkeit abgeschlämmt. Vor der Ausübung des Druckstosses kann in der Filterkammer ein Unterdruck erzeugt werden, um die Wirkung noch zu erhöhen. Die Filterelemente (4) können gewünschten- falls einen oberen, gasundurchlässigen Bereich (5) aufweisen.

   Diese Methode ermöglicht eine einfache und äusserst wirksame Reinigung und erfordert nur geringe apparative Aenderungen an Anschwemmfiltern, die nach dem Stand der Technik gereinigt werden.

EP 0 581 740 A2

Die Erfindung betrifft ein neues Verfahren zur Reinigung von Anschwemmfiltern mit hängend eingebauten Filterelementen sowie ein hierzu geeignetes Anschwemmfilter.

Anschwemmfilter werden insbesondere zur Behandlung grösserer Flüssigkeitsströme eingesetzt, wie beispielsweise zur Reinigung der Kondensate von Dampferzeugungsanlagen.

Nach Beendigung eines Arbeitszyklus eines Anschwemmfilters ist jeweils eine möglichst vollständige und gleichmässige Abreinigung des Anschwemmhilfsmittels zusammen mit dem während des Arbeitszyklus gebildeten Filterkuchens wichtig. Dadurch kann einerseits die Filterkapazität pro Arbeitszyklus hoch gehalten werden, und anderseits kann bei der nachfolgenden Anschwemmung das neue Anschwemmhilfsmittel gleichmässig auf die gereinigte Filterunterlage aufgebracht werden.

Die meisten Anschwemmfilter bestehen aus stehenden, in der Regel zylindrischen Druckbehältern mit Durchmessern und zylindrischen Höhen von etwa 0,5 bis 3 m und darin in vertikaler Anordnung eingebauten Filterelementen. Letztere bilden die Unterlage für die Anschwemmung, d.h. sie bilden das Filtermedium, auf welches der Filterkuchen und, gegebenenfalls, das Anschwemmhilfsmittel aufgebaut werden. Am häufigsten werden zylindrische Filterelemente mit Durchmessern von etwa 20 bis 60 mm und Längen von etwa 0,5 bis 2 m verwendet. Sie müssen eine ausreichende Zug- und Druckfestigkeit und eine genügende Durchlässigkeit für Flüssigkeiten aufweisen und können z.B. aus porösen Metallen, porösen keramischen Materialien oder Gewebematerialien gebildet oder als Wickelelemente aus Kunststoff- oder Textilfasern ausgebildet sein.

Der Filterbehälter ist jeweils durch eine horizontale Filterplatte, in welche die Filterelemente eingebaut sind, in den Schmutzraum (Filterkammer) und den Reinraum (Plenum) unterteilt. Der Ausdruck "Filterplatte" bezeichnet im Rahmen der vorliegenden Erfindung eine Platte mit Oeffnungen zur Befestigung der Filterelemente, die die Filterkammer gegen das Plenum - mit Ausnahme der besagten Oeffnungen - dicht verschliesst. Dabei sind zwei grundsätzlich mögliche Anordnungen zu unterscheiden, nämlich Anschwemmfilter mit "hängend" eingebauten Filterelementen und solche mit "stehend" eingebauten Filterelementen.

Im Falle von hängend eingebauten Filterelementen ist die Filterplatte im oberen Teil des Filterbehälters eingebaut; der Schmutzraum ist unten, und der Reinraum ist oben. Zur Filtration strömt die zu filtrierende Flüssigkeit unten in den Schmutzraum ein, und das Filtrat verlässt den Filterbehälter oben über eine am Reinraum angeordnete Abflussleitung.

Bei Anschwemmfiltern und stehend eingebauten Filterelementen ist hingegen die Filterplatte im unteren Teil des Filterbehälters eingebaut; der Schmutzraum ist oben und der Reinraum ist unten. Zur Filtration wird die zu filtrierende Flüssigkeit oben in den Schmutzraum geleitet, und das Filtrat wird unten über eine am Reinraum angeordnete Leitung entnommen.

Abgesehen von der unterschiedlichen Zugänglichkeit der Filterelemente und damit ihrer Ein- und Ausbaubarkeit unterscheiden sich die beiden Anordnungen ganz wesentlich durch ihre Anschwemmbarkeit und durch ihre Rückspülbarkeit. Anschwemmfilter mit hängend eingebauten Filterelementen lassen sich gleichmässiger anschwemmen, jene mit stehenden Filterelementen jedoch wirksamer durch Rückspülung reinigen.

Nach den gebräuchlichen Methoden zur Reinigung der Anschwemmfilter mit hängenden Filterelementen wird das im Reinraum vorhandene bzw. über eine Zuleitung in den Reinraum eingeführte Spülmedium rückwärts in der der Filterrichtung entgegengesetzten Richtung durch die Filterelemente geleitet und zusammen mit den Verunreinigungen und der im Schmutzraum vorhandenen Flüssigkeit über eine am unteren Ende des Filterbehälters angeordnete Entleerungsleitung abgeführt. Als Spülmedium dient meist das Filtrat selbst oder eine Flüssigkeit mit filtratähnlicher Zusammensetzung. Zur Verbesserung der Reinigungswirkung wird die Strömung der Spülflüssigkeit oft mit Druckluft beschleunigt und/oder die Armatur der Entleerungsleitung schlagartig geöffnet. Trotzdem bleibt der Erfolg dieser Reinigungsmethode hinter der Wirkung der Reinigung stehender Filterelemente zurück.

Stehend eingebaute Filterelemente lassen sich besser reinigen, weil bei dieser Anordnung die hydraulischen Voraussetzungen dazu grundlegend günstiger liegen. Insbesondere ist es möglich, praktisch die ganze zur Verfügung stehende Energie dafür einzusetzen, das Spülmedium durch die Filterelemente zu treiben.

Bei den gebräuchlichen Reinigungsmethoden für Anschwemmfilter mit hängend eingebauten Filterelementen wird hingegen ein grosser Teil der Energie zur Beschleunigung der grossen Flüssigkeitsmenge im Schmutzraum benötigt, und ein weiterer Verlust entsteht durch den Strömungswiderstand in der Entleerungsarmatur. Infolgedessen kann nur ein relativ geringer Teil der eingesetzten Energie zur Beschleunigung des Spülmittels genutzt werden und die Reinigungswirkung, die vor allem vom Produkt aus der Geschwindigkeit und der Masse des Spülmediums abhängt, ist dadurch erheblich geringer.

In US-A-5,017,241 wurde eine Methode zur Reinigung von Anschwemmfiltern mit hängend eingebauten Filterelementen vorgeschlagen, mit der solche Verluste teilweise vermieden werden können. Nach diesem Vorschlag sind die Filterelemente an ihren oberen, im Plenum (Reinraum) liegenden Enden so ausgebildet, dass aus der unteren Filterkammer (Schmutzraum) Flüssigkeit abgelassen werden kann, ohne dass dabei die im Reinraum vorhandene Flüssigkeit vollständig nachfliesst.

Die Reinigung kann gemäss diesem Vorschlag so erfolgen, dass zuerst durch Oeffnen einer oben am Plenum angeordneten Belüftungsleitung und der unten am Filterbehälter angeordneten Entleerungsleitung die Flüssigkeit aus der Filterkammer abgelassen und im Plenum eine bestimmte, durch die Ausbildung des "Wasserschlosses" definierte Spülmittelmenge vorgelegt wird. Anschliessend wird mittels Druckluft, die in die Filterkammer eingeleitet wird und über die Filterelemente ins Plenum strömen kann, in der Filterkammer und im Plenum ein Ueberdruck aufgebaut. Durch Schliessen der Druckluftzufuhr und rasches Oeffnen der Entleerungsleitung und einer an der Filterkammer angeordneten Entlüftungsleitung wird dann derselbe Druckunterschied zwischen Plenum und Filterkammer erzeugt, der das im Plenum vorgelegte Spülmedium durch die Filterelemente treibt. Gewünschtenfalls kann dieser Effekt noch durch Oeffnen einer am Plenum angeordneten Druckluftzuleitung unterstützt werden.

Diese Methode bringt eine gewisse Verbesserung der Reinigung hängend eingebauter Filterelemente, da nur die im Plenum vorgelegte Flüssigkeitsmenge beschleunigt werden muss, womit eine höhere Geschwindigkeit und folglich eine bessere Reinigungswirkung erzielt werden kann. Sie bedingt allerdings einige apparative Aenderungen, insbesondere die Anwendung spezieller Filterelemente mit einem "Wasserschloss" sowie eine Druckleitung und eine Entlüftungsleitung an der Filterkammer, und der gesamte Filterbehälter muss so ausgelegt sein, dass er dem Ueberdruck standhalten kann. Trotzdem kann auch mit dieser Lösung nur ein kleiner Teil der eingesetzten Energie zur Beschleunigung des Spülmediums herangezogen werden, da zuerst im ganzen Behälter ein Ueberdruck erzeugt werden muss, aber nur der im Plenum aufgebaute Ueberdruck der Beschleunigung des Spülmediums dient. Schliesslich kann auch hier zur Beschleunigung des Spülmediums nur der Druckunterschied zwischen Plenum und Filterkammer eingesetzt werden, der sich durch den Strömungswiderstand in den Filterelementen ergibt. Bedingt durch die zum Entweichen der Druckluft aus der Filterkammer und den Filterelementen benötigte Zeit, kann sich jedoch der Druck in der Filterkammer nur langsam abbauen, wobei gleichzeitig das vorgelegte Spülmedium abzufliessen beginnt. Da anderseits der Strömungswiderstand in den Filterelementen im Hinblick auf die Filtration verhältnismässig gering sein muss, kann sich in der Regel nur eine relativ kleine Druckdifferenz, beispielsweise höchstens 0,1 bar, und erst innerhalb von mehreren Sekunden aufbauen. Die vorgelegte Spülmittelmenge kann daher ganz oder weitgehend abfliessen, bevor die gewünschte, treibende Kraft zur Beschleunigung des Spülmittels erreicht wird.

Der vorliegenden Erfindung liegt die Aufgabe zugrunde, eine einfachere Reinigungsmethode bereitzustellen, die mit möglichst geringen apparativen Aenderungen durchgeführt werden kann und die zudem eine noch wirksamere Reinigung gestattet als nach der vorgenannten Methode.

Zur Lösung dieser Aufgabe wird erfindungsgemäss ein Reinigungsverfahren gemäss den Ansprüchen 1 bis 12 vorgeschlagen, welches eine einfachere und wirksamere Reinigung von Anschwemmfiltern mit hängend eingebauten Filterelementen ermöglicht.

Für das erfindungsgemässe Verfahren ist die Erkenntnis entscheidend, dass die maximale Geschwindigkeit des Spülmediums nur sehr kurzzeitig aufrechterhalten werden muss. Eine Verlängerung der Spüldauer über einen gewissen Wert erhöht die Reinigungswirkung nur noch marginal, erhöht aber unnötigerweise den Verbrauch an Spülmittel. Ferner liegt dem erfindungsgemässen Verfahren die Erkenntnis zugrunde, dass die geringere Durchlässigkeit der Filterelemente am Ende eines Arbeitszyklus zur Vereinfachung des Reinigungsverfahrens ausgenützt werden kann.

Zu Beginn des erfindungsgemässen Reinigungsverfahrens ist der im Plenum verfügbare Raum vollständig oder fast vollständig (z.B. zu mindestens 90%) mit dem Spülmedium gefüllt. Dieses kann beispielsweise über die Filtrat-Abflussleitung, über die Zuleitung für die zu filtrierende Flüssigkeit oder über eine separate Leitung zugeführt werden. Vorzugsweise kann am Plenum ein Entlüftungsstutzen angeordnet sein, über den im Plenum allenfalls vorhandene Luft abgeleitet werden kann. Wird zur Reinigung das Filtrat benutzt, so kann die am Ende eines Arbeitszyklus im Plenum vorhandene Filtratmenge direkt als Spülmedium dienen.

Die zur Reinigung benötigte Spülmittelmenge kann je nach Anschwemmfilter und Verschmutzung variieren und beispielsweise etwa 5-20 l pro m² Filteroberfläche betragen. Gewünschtenfalls kann im Plenum ein Verdrängungskörper untergebracht werden, wenn ein bestimmtes Spülmittelvolumen vorgelegt werden soll, das kleiner ist als das Volumen des Plenums.

Im ersten Schritt des erfindungsgemässen Verfahrens wird, wie bei dem in US-A-5,017,241 beschriebenen Verfahren, die in der Filterkammer vorhandene Flüssigkeit durch Oeffnen der Entleerungsleitung und einer Belüftungsleitung ganz oder teilweise abgeleitet. Beim vorbekannten Verfahren wird jedoch das Plenum belüftet und die im Plenum vorgelegte Flüssigkeit fliesst bis zu einer durch die Wasserschlösser an den Filterelementen definierten Restmenge über die Filterelemente ab. Nach dem erfindungsgemässen Verfahren soll hingegen eine Belüftung des Plenums und ein Abfliessen von Spülmedium vermieden oder möglichst gering gehalten werden.

Dies wird erfindungsgemäss dadurch erreicht, dass die Belüftung über eine in den obersten Bereich der Filterkammer mündende Belüftungsleitung erfolgt. Die Luft kann somit direkt in die Filterkammer strömen und ermöglicht dadurch ein rasches Ableiten von Flüssigkeit aus der Filterkammer. Hingegen kann Luft nur vergleichsweise langsam über die Filterelemente in das Plenum eindringen. Infolge der nach einem Arbeitszyklus gegebenen geringeren Durchlässigkeit der Filterelemente mit ihrem Filterkuchen wird der Durchtritt von Luft zusätzlich verzögert. Da das Ableiten von Flüssigkeit aus der Filterkammer vergleichsweise rasch erfolgt, kann daher auch bei Verwendung üblicher Filterelemente nur eine geringe Luftmenge ins Plenum eindringen, die die Wirksamkeit des Verfahrens nicht beeinträchtigt.

Das erfindungsgemässe Reinigungsverfahren eignet sich daher für Anschwemmfilter mit üblichen Filterelementen. Es eignet sich aber insbesondere auch für Anschwemmfilter, die mit einem "Wasserschloss" versehene Filterelemente, wie in US-A-5,017,241 beschrieben, aufweisen. Das "Wasserschloss" dient jedoch im vorliegenden Verfahren nicht dazu, eine bestimmte Flüssigkeitsmenge im Plenum vorzulegen, sondern es kann geringe Luftmengen die allenfalls in die Filterelemente eindringen können, festhalten und damit deren Eindringen in das Plenum verhindern.

Um ein allfälliges Eindringen von Luft in das Plenum zu vermeiden, können jedoch vorzugsweise Filterelemente verwendet werden, die in ihrem oberen, innerhalb der Filterkammer liegenden Bereich gasundurchlässig sind. Beispielsweise können die Filterelemente einen gasundurchlässigen Filterelementstutzen aufweisen, der in der entsprechenden Oeffnung der Filterplatte befestigt wird. Bei Verwendung solcher Filterelemente sollte zweckmässigerweise höchstens soviel Flüssigkeit aus der Filterkammer abgeleitet werden, dass die Höhe der in der Filterkammer gebildeten Luftschicht der Länge des gasundurchlässigen Bereichs der Filterelemente entspricht.

Im ersten Schritt des erfindungsgemässen Verfahrens wird jedoch vorzugsweise mindestens soviel Flüssigkeit aus der Filterkammer abgeleitet werden, dass in der Filterkammer eine Luftschicht gebildet wird, deren Volumen mindestens etwa halb so gross ist wie das Volumen des im Plenum vorgelegten Spülmediums. Ist das Luftvolumen mindestens etwa gleich gross wie das Spülmittelvolumen, so wird eine Dämpfung des anschliessenden Druckstosses ganz oder weitgehend vermieden. Ist das Luftvolumen kleiner als das Spülmittelvolumen, so wird zwar eine gewisse Dämpfung des Druckstosses bewirkt, zugleich kann aber, falls erwünscht, die Abreinigung im oberen Bereich der Filterelemente verbessert werden.

Um die Wirkung des anschliessenden Druckstosses zu verbessern, kann nach dem vollständigen oder teilweisen Ableiten der Flüssigkeit aus der Filterkammer vorzugsweise die Belüftungsarmatur geschlossen und in der Filterkammer ein Unterdruck erzeugt werden. Dies kann beispielsweise dadurch erreicht werden, dass die Filterkammer oder, vorzugsweise, die Entleerungsleitung an eine externe Vakuumanlage, z.B. ein Vakuumaggregat oder ein bestehendes Vakuumnetz, angeschlossen wird. Ferner kann, falls die in der Filterkammer vorhandene Flüssigkeit nur teilweise abgeleitet wurde, die in der Filterkammer und der Entleerungsleitung verbleibende Flüssigkeit zur Erzeugung eines partiellen Vakuums ausgenützt werden, z.B. durch barometrisches Verlegen der Entleerungsleitung.

Nach dem Ableiten von Flüssigkeit aus der Filterkammer können die Entleerungsarmatur und die Belüftungsarmatur geschlossen werden oder offen bleiben. Soll die Flüssigkeit nur teilweise abgeleitet werden, so wird jedoch das Abfliessen zweckmässigerweise durch Schliessen der Entleerungsarmatur und/oder der Belüftungsarmatur, vorzugsweise durch Schliessen der Belüftungsleitung gestoppt. Wenn in der Filterkammer ein partielles Vakuum erzeugt werden soll, so wird zweckmässigerweise vorher die Belüftungsarmatur geschlossen; die Entleerungsarmatur muss nur dann geschlossen werden, wenn der Unterdruck über eine separate Leitung erzeugt wird; sie bleibt jedoch insbesondere dann geöffnet, wenn die Entleerungsleitung an eine Vakuumanlage angeschlossen ist oder in der Filterkammer und der Entleerungsleitung verbleibende Flüssigkeit zur Erzeugung des Unterdrucks ausgenützt wird.

Nach dem Ableiten von Flüssigkeit aus der Filterkammer und, gegebenenfalls, der Erzeugung eines Unterdrucks in der Filterkammer wird im Plenum ein Druckstoss erzeugt, der das Spülmedium mit hoher Geschwindigkeit durch die Filterelemente treibt (Spülstoss). Dies wird erfindungsgemäss durch kurzes Oeffnen der Armatur einer am Plenum angeordneten Druckerzeugungsleitung erreicht, über die Treibgas oder Spülmedium unter Druck ins Plenum geleitet wird. Die Druckerzeugung kann vorzugsweise mit vorgespanntem Gas, insbesondere Druckluft, aus einem externen Behälter erfolgen. Im allgemeinen genügt ein Druck von etwa 2 bis 6 bar. Bei Verwendung eines Treibgases werden die Höhe des Drucks und die Dauer der Druckausübung vorzugsweise so bemessen, dass sie gerade ausreichen, um die im Plenum vorgelegte Spülmittelmenge durch die Filterelemente zu treiben. Um eine kurze und kontrollierte Dauer des Druckstosses zu ermöglichen, wird die Druckerzeugung vorzugsweise mittels einer schnell schaltbaren Armatur geregelt, beispielsweise mittels eines Kugelhahns mit einem Antrieb, der durch Drehen der Kugel in einer stetigen Bewegung um 180° geöffnet und gleich wieder verschlossen werden kann.

Die Reinigungswirkung ist der Strömungsgeschwindigkeit des Spülmediums annähernd proportional. Darum geht Spülmittel, welches nicht mit der maximalen Geschwindigkeit durch die Filterelemente gepresst wird, mehr oder weniger nutzlos verloren. Das erfindungsgemässe Verfahren gestattet einen sehr raschen, praktisch momentanen Druckaufbau und dieser Druck wird nur kurz aufrecht erhalten, womit eine optimale Reinigungswirkung erzielt werden kann. Je mehr Luft im Plenum vorliegt, desto stärker wird der Spülstoss gedämpft. Daher sollte vermieden werden, dass vor dem Spülstoss grössere Mengen an Luft im Plenum vorhanden sind. Geringe Luftmengen, beispielsweise bis zu etwa 10% des Plenuminhalts, dämpfen hingegen den Spülstoss nur unwesentlich und beeinträchtigen daher die Reinigungswirkung kaum. Da das Plenum zu Beginn vollständig oder fast vollständig mit Spülmittel gefüllt ist und während des ersten Verfahrensschrittes Luft nicht oder nur sehr langsam ins Plenum eindringen kann, kann gemäss dem erfindungsgemässen Verfahren eine praktisch optimale Reinigungswirkung erzielt werden.

Beim Verfahren gemäss US-A-5,017,241 baut sich hingegen die treibende Kraft - bedingt durch das Ausströmen der Druckluft aus der Filterkammer - nur vergleichsweise langsam auf, und anschliessend nimmt sie - bedingt durch den abnehmenden Druckunterschied - wieder kontinuierlich ab. Weitere Nachteile dieses Verfahrens sind, dass zuerst auch in der Filterkammer ein Ueberdruck erzeugt werden muss und der Filterbehälter den Druck des Treibgases halten muss. Beim erfindungsgemässen Verfahren wird hingegen nur im Plenum ein Druckstoss erzeugt, und der Druck über der Druckerzeugungsarmatur baut sich bis zum Strömungswiderstand durch die Filterelemente ab. Dieser Widerstand liegt wegen der grossen Filterfläche unter 1 bar und damit immer unter dem Auslegungsdruck des Filterbehälters.

Im letzten Schritt des erfindungsgemässen Verfahrens werden schliesslich die Verunreinigungen und die Flüssigkeit bei geöffneter Entleerungsarmatur und bei geöffneter Belüftungsarmatur über die Entleerungsleitung abgeschlämmt.

Gewünschtenfalls kann die beschriebene Reinigung mittels eines Spülstosses einmal oder mehrmals wiederholt werden. Erfolgt der Druckstoss durch Einleiten von Spülmedium unter Druck, so kann dies in einfacher Weise dadurch geschehen, dass nach erfolgtem Druckstoss die Druckerzeugungsarmatur erneut kurz geöffnet wird, da das Plenum vollständig oder nahezu vollständig mit Spülmedium gefüllt bleibt. Bei Verwendung von Treibgas kann dies vorzugsweise so erfolgen, dass der Filterbehälter - vor oder nach dem Abschlämmen - erneut mit Spülmedium gefüllt und das Reinigungsverfahren wiederholt wird.

Die Erfindung betrifft ebenfalls ein Anschwemmfilter gemäss den Ansprüchen 13 bis 17 zur Durchführung des erfindungsgemässen Reinigungsverfahrens. Die Funktionsweise und die bevorzugten Ausführungsformen ergeben sich aus den obigen Erläuterungen. Gegenüber den herkömmlichen Anschwemmfiltern unterscheidet es sich hauptsächlich durch die in den obersten Bereich der Filterkammer mündende Belüftungsleitung und durch die Art, wie die Entleerungsarmatur, die Belüftungsarmatur und die Druckerzeugungsarmatur während der Reinigungsoperation nacheinander geschaltet werden.

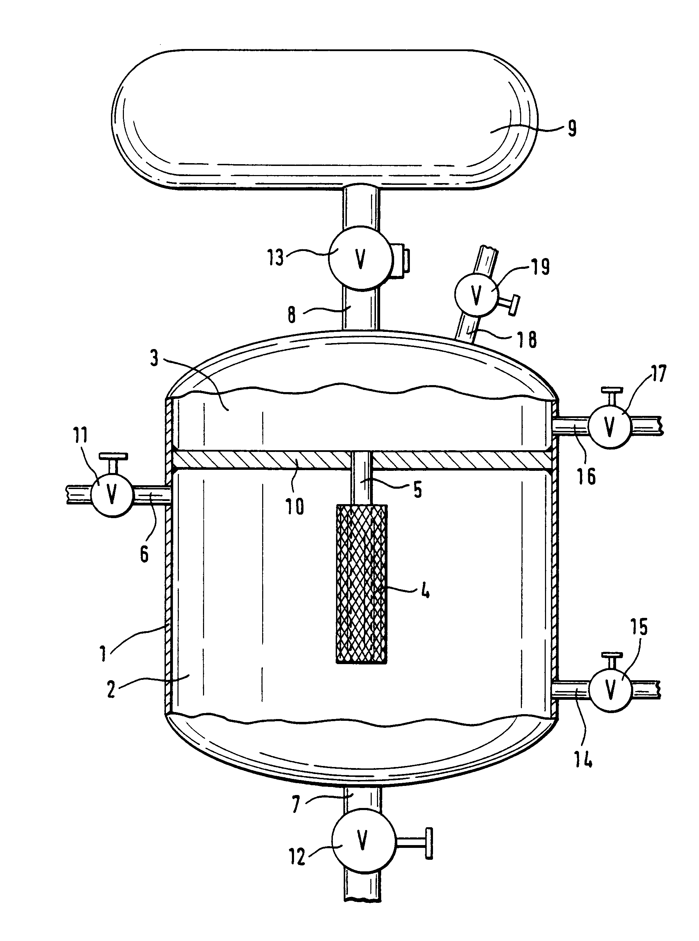

Fig. 1 zeigt eine schematische Darstellung eines bevorzugten Anschwemmfilters. Der Filterbehälter 1 ist durch eine Filterplatte 10 in eine untere Filterkammer (Schmutzraum) 2 und ein oberes Plenum (Reinraum) 3 unterteilt. In der Filterkammer 2 sind eine Vielzahl von Filterelementen 4 vertikal angeordnet, die mittels eines gasundurchlässigen Filterelementstutzens 5 in entsprechenden Oeffnungen der Filterplatte 10 befestigt sind; aus Gründen der einfacheren Darstellung ist in Fig. 1 nur ein Filterelement abgebildet. Zur Filtration wird die zu filtrierende Flüssigkeit über eine Zuleitung 14 in die Filterkammer 2 geleitet und das Filtrat aus dem Plenum 3 über eine Filtrat-Abflussleitung 16 abgeleitet. Die Zuleitung 14 und die Abflussleitung 16 sind mit je einer Armatur 15 bzw. 17 versehen, die während der Filtration geöffnet und während der Reinigung geschlossen sind. Das Plenum 3 kann während der Filtration oder während des Auffüllens mit Spülmedium notfalls über einen mit einer Armatur 19 zum Oeffnen und Schliessen versehenen Entlüftungsstutzen 18 entlüftet werden. Zur Durchführung der Reinigung sind drei Leitungen mit je einer Armatur zum Oeffnen und Schliessen vorgesehen, die wie oben beschrieben geschaltet werden, nämlich ein im obersten Bereich der Filterkammer 2 angeordneter Belüftungsstutzen 6 mit einer Belüftungsarmatur 11, eine im Boden des Filterbehälters 1 angeordnete Entleerungsleitung 7 mit einer Entleerungsarmatur 12 und eine am Plenum 3 angeordnete Treibgaszuleitung 8 mit einer hier als Kugelhahn ausgebildeten Druckerzeugungsarmatur 13. Die Treibgasleitung 8 ist mit einem Treibgas-Druckbehälter 9 verbunden. Das Spülmedium kann beispielsweise bei geöffneter Filtrat-Abflussarmatur 17 über Zuleitung 14 zugeführt werden, oder es kann vorzugsweise das am Ende eines Arbeitszyklus im Plenum 3 vorhandene Filtrat als Spülmedium dienen. Zur Reinigung werden zuerst die Entleerungsarmatur 12 und die Belüftungsarmatur 11 geöffnet, um Flüssigkeit aus der Filterkammer 2 abfliessen zu lassen. Die Belüftungsarmatur 11 wird vorzugsweise wieder geschlossen, bevor die Höhe der in der Filterkammer 2 gebildeten Luftschicht die Höhe der Filterelementstutzen 5 erreicht hat, um den Durchtritt von Luft ins Plenum 3 möglichst vollständig auszuschliessen. Das Schliessen der Belüftungsarmatur 11 (bei geöffneter Entleerungsarmatur 12) bewirkt ein partielles Vakuum in der Filterkammer 2. Durch anschliessendes, kurzes Oeffnen der Druckerzeugungsarmatur 13 wird das Spülmedium durch die Filterelemente 4 in die Filterkammer gepresst, und danach werden durch Oeffnen der Belüftungs - armatur 11 der Filterkuchen und allfällige Anschwemmhilfsmittel zusammen mit der Flüssigkeit über die Entleerungsleitung abgeschlämmt.

Zum besseren Verständnis wird die erfindungsgemässe Reinigungsmethode nachfolgend an zwei typischen Beispielen durch Angabe der mittleren Zeitspannen und der jeweiligen Einstellung der Belüftungsarmatur 11, der Entleerungsarmatur 12 und der Druckerzeugungsarmatur 13 weiter veranschaulicht. Die Dauer der einzelnen Schritte sollte jedoch in jedem Fall an die Geometrie des jeweiligen Anschwemmfilters angepasst und möglichst optimal aufeinander abgestimmt werden. Die angegebenen Zeitspannen können daher höchstens einen groben Anhaltspunkt vermitteln und sind keinesfalls im Sinne einer Einschränkung zu verstehen.

Beispiel 1

Reinigungsmethode mit Erzeugung eines Unterdrucks in der Filterkammer:

| | | Typische Dauer (sec) | Armatur | | |
|---|---|---|---|---|---|
| | | | 11 | 12 | 13 |
| A) | Ausgangslage mit entlüftetem, mit Flüssigkeit gefülltem Filterbehälter nach Beendigung eines Arbeitszyklus | | zu | zu | zu |
| B) | Filterkammer partiell entleeren | 10 | offen | offen | zu |
| C) | Unterdruck in Filterkammer aufbauen | 2 | zu | offen | zu |
| D) | Spülstoss | 1 | zu | offen | offen |
| E) | Abschlämmen | 30 | offen | offen | zu |

Beispiel 2

Reinigungsmethode ohne Erzeugung eines Unterdrucks in der Filterkammer:

| | | Typische Dauer (sec) | Armatur | | |
|---|---|---|---|---|---|
| | | | 11 | 12 | 13 |
| A) | Ausgangslage mit entlüftetem, mit Flüssigkeit gefülltem Filterbehälter nach Beendigung eines Arbeitszyklus | | zu | zu | zu |
| B) | Filterkammer partiell entleeren | 12 | offen | offen | zu |
| C) | Spülstoss | 1 | offen | offen | offen |
| D) | Abschlämmen | 30 | offen | offen | zu |
| | | | | | E |

**Patentansprüche**

1. Verfahren zur Reinigung eines Anschwemmfilters, welches durch eine im Filterbehälter (1) horizontal angeordnete Filterplatte (10) in ein oberes Plenum (3) und eine untere Filterkammer (2) unterteilt ist und in der Filterkammer (2) vertikal angeordnete und in entsprechenden Oeffnungen in der Filterplatte (10) befestigte Filterelemente (4) aufweist, dadurch gekennzeichnet, dass der im Plenum (3) verfügbare Raum zu Beginn des Reinigungsverfahrens vollständig oder fast vollständig mit einer Flüssigkeit gefüllt ist, die als Spülmedium dient, und das Reinigungsverfahren so durchgeführt wird, dass
   a) zuerst durch Oeffnen der Belüftungsarmatur (11) einer in den obersten Bereich der Filterkammer (2) mündenden Belüftungsleitung (6) und durch Oeffnen der Entleerungsarmatur (12) einer im Boden des Filterbehälters (1) angeordneten Entleerungsleitung (7) die in der Filterkammer (2) vorhandene Flüssigkeitsmenge ganz oder teilweise abgeleitet wird,

EP 0 581 740 A2

b) dann durch kurzes Oeffnen der Armatur (13) einer am Plenum (3) angeordneten Druckerzeugungsleitung (8), über die Treibgas oder Spülmedium unter Druck ins Plenum (3) geleitet wird, im Plenum (3) ein Druckstoss erzeugt wird, der das Spülmedium durch die Filterelemente (4) treibt, und

c) bei geöffneter Belüftungsarmatur (11) und geöffneter Entleerungsarmatur (12) die Verunreinigungen und die Flüssigkeit aus der Filterkammer (2) abgeschlämmt werden.

2. Verfahren nach Anspruch 1, dadurch gekennzeichnet, dass die Dauer des Druckstosses mittels einer schnell schaltbaren Armatur (13) geregelt wird, vorzugsweise mittels eines Kugelhahns mit einem Antrieb, der durch Drehen der Kugel in einer stetigen Bewegung um 180° den Kugelhahn öffnet und gleich wieder schliesst.

3. Verfahren nach Anspruch 1 oder 2, dadurch gekennzeichnet, dass die Druckerzeugung mit Treibgas erfolgt und bezüglich Dauer und Druck so bemessen wird, dass sie gerade ausreicht, um die im Plenum (3) vorgelegte Menge an Spülmedium durch die Filterelemente zu treiben.

4. Verfahren nach einem der Ansprüche 1 bis 3, dadurch gekennzeichnet, dass die Druckerzeugung mit vorgespanntem Gas aus einem externen Behälter (9) erfolgt.

5. Verfahren nach einem der Ansprüche 1 bis 4, dadurch gekennzeichnet, dass nach vollständigem oder teilweisem Ableiten der Flüssigkeit aus der Filterkammer (2) im ersten Verfahrensschritt die Belüftungsarmatur (11) geschlossen und in der Filterkammer (2) ein Unterdruck erzeugt wird.

6. Verfahren nach Anspruch 5, dadurch gekennzeichnet, dass der Unterdruck mit einer externen Vakuumanlage erzeugt wird, die mit der Filterkammer (2) oder, vorzugsweise, mit der Entleerungsleitung (7) verbunden ist.

7. Verfahren nach Anspruch 5, dadurch gekennzeichnet, dass die in der Filterkammer (2) vorhandene Flüssigkeit nur teilweise abgeleitet wird und die in der Filterkammer (2) und der Entleerungsleitung (7) verbleibende Flüssigkeit zur Erzeugung des Unterdrucks, vorzugsweise durch barometrisches Verlegen der Entleerungsleitung, ausnützt.

8. Verfahren nach Anspruch 7, dadurch gekennzeichnet, dass Filterelemente (4) verwendet werden, die in ihrem oberen, innerhalb der Filterkammer (2) liegenden Bereich (5) gasundurchlässig sind, und höchstens soviel Flüssigkeit aus der Filterkammer (2) abgeleitet wird, dass die Höhe der gebildeten Luftschicht der Länge des gasundurchlässigen Bereichs (5) der Filterelemente (4) entspricht.

9. Verfahren nach einem der Ansprüche 1 bis 8, dadurch gekennzeichnet, dass im ersten Verfahrensschritt mindestens soviel Flüssigkeit aus der Filterkammer (2) abgeleitet wird, dass das Volumen der in der Filterkammer (2) gebildeten Luftschicht mindestens halb so gross ist wie das Volumen des im Plenum (3) vorgelegten Spülmediums.

10. Verfahren nach einem der Ansprüche 1 bis 9, dadurch gekennzeichnet, dass das Filtrat als Spülmedium dient.

11. Verfahren nach einem der Ansprüche 1 bis 10, dadurch gekennzeichnet, dass 5-20 l Spülmedium pro m² Filteroberfläche verwendet werden.

12. Verfahren nach einem der Ansprüche 1 bis 11, dadurch gekennzeichnet, dass zur Beschleunigung der Entleerung der Filterkammer (2) ein Treibgas unter einem höheren Druck durch die Belüftungsleitung (6) und die Belüftungsarmatur (11) eingeleitet wird.

13. Anschwemmfilter zur Durchführung des Verfahrens gemäss Ansprüchen 1 bis 12 aus
- einem Filterbehälter (1), der durch eine horizontal angeordnete Filterplatte (10) in ein oberes Plenum (3) und eine untere Filterkammer (2) unterteilt ist, und in der Filterkammer (2) vertikal angeordneten Filterelementen (4), die in entsprechenden Oeffnungen der Filterplatte (10) befestigt sind,
- einer Zuleitung (14) für die zu filtrierende Flüssigkeit zur Filterkammer (2) und einer Abflussleitung (16) zur Ableitung des Filtrats aus dem Plenum (3), die mittels Armaturen (15, 17) während der Filtration geöffnet und während der Reinigung geschlossen werden können,
- einer am unteren Ende des Filterbehälters (1) angeordneten und mit einer Armatur (12) zum Oeffnen und Schliessen versehenen Entleerungsleitung (7),

- einer am Plenum (3) angeordneten und mit einer Armatur (13) zum Oeffnen und Schliessen versehenen Druckerzeugungsleitung (8) zur Zufuhr von Treibgas oder Spülmedium unter Druck, und
- einer in den obersten Bereich der Filterkammer (2) mündenden und mit einer Armatur (11) zum Oeffnen und Schliessen versehenen Belüftungsleitung (6),
- wobei die Entleerungsarmatur (12), die Druckerzeugungsarmatur (13) und die Belüftungsarmatur (11) während der Filtration geschlossen sind und zur Reinigung nacheinander so geschaltet sind, dass

    a) zuerst die Belüftungsarmatur (11) und die Entleerungsarmatur (12) geöffnet werden, um die in der Filterkammer (2) vorhandene Flüssigkeitsmenge ganz oder teilweise abzuleiten,

    b) dann, bei geöffneter Belüftungsarmatur (11) oder nach dem Schliessen der Belüftungsarmatur (11), die Druckerzeugungsarmatur (13) kurz geöffnet wird, um Spülmedium aus dem Plenum (3) durch die Filterelemente (4) zu treiben, und

    c) schliesslich bei geöffneter Belüftungsarmatur (11) und geöffneter Entleerungsarmatur (12) die Verunreinigungen und die Flüssigkeit aus der Filterkammer (2) abgeschlämmt werden können.

14. Anschwemmfilter nach Anspruch 13, dadurch gekennzeichnet, dass die Druckerzeugungsarmatur (13) eine schnell schaltbare Armatur ist, vorzugsweise ein Kugelhahn mit einem Antrieb, der durch Drehen der Kugel in einer stetigen Bewegung um 180° geöffnet und gleich wieder verschlossen werden kann.

15. Anschwemmfilter nach Anspruch 13 oder 14, dadurch gekennzeichnet, dass die Druckerzeugungsleitung (8) an einen externen Behälter (9) mit vorgespanntem Gas angeschlossen ist.

16. Anschwemmfilter nach einem der Ansprüche 13 bis 15, dadurch gekennzeichnet, dass die Belüftungsleitung (6) an einen externen Behälter mit vorgespanntem Gas angeschlossen ist, wobei es sich bei diesem externen Behälter um den Behälter (9) oder einen anderen Behälter aber auch um ein Druckluftnetz bzw. Druckluftsystem handeln kann.

17. Anschwemmfilter nach einem der Ansprüche 13 bis 16, dadurch gekennzeichnet, dass die Filterelemente (4) in ihrem oberen, innerhalb der Filterkammer (2) liegenden Bereich (5) gasundurchlässig sind.